# EUROPEAN PATENT APPLICATION

(11) **EP 4 305 941 A1**
(43) Date of publication of application: **17.01.2024**
(21) Application number: 23184261.8
(22) Date of filing: 07.07.2023
(51) Int. Cl.: A01B 76/00, B60K 37/00, A01B 59/00

(54) **IMPROVED WORK VEHICLE AND CONTROL METHOD THEREOF**

(30) Priority: 13.07.2022 IT 202200014749
(71) Applicant: CNH Industrial Italia S.p.A., 10156 Torino (IT)
(72) Inventor: GIANNOTTA, Gian Marco, 42121 Reggio Emilia (RE) (IT); MANTOVANI, Michele, 46026 Quistello (MN) (IT)
(74) Representative: CNH Industrial IP Department

(57) **Abstract**

Method for controlling a work vehicle, the work vehicle comprising an electronic control unit and being configured to be connected to at least one implement, the method comprising the steps of: a) selecting an implement connected to the work vehicle; b) verifying, by the electronic control unit, that operational conditions of the work vehicle are satisfied, said implement being engageable only if said operational conditions are satisfied; c) if said implement is engageable, enabling, by the electronic control unit, said implement upon confirmation of the selection of said implement; d) disabling, by the electronic control unit, all implements upon a pause command; and e) returning to step b) for each implement enabled at step c), upon a resume command.

## Description

### TECHNICAL FIELD

The present invention concerns a work vehicle and a related control method, in particular system and method for controlling at least one implement of the work vehicle.

The present invention finds its preferred, although not exclusive, application in an agricultural vehicle, such as a tractor. Reference will be made to this application by way of example below.

### BACKGROUND OF THE INVENTION

As is known, an agricultural vehicle, such as a tractor, is configured to carry a plurality of implements, such as a plough, a cultivator, a mulcher, a disk harrow or a power harrow.

In order to manage such implements, a dedicated protocol can be used, such as an ISOBUS-based solution. Most ISOBUS-based solutions consists of the tractor controlling the implements.

However, in an ISOBUS-based solutions known as Tractor Implement Management (TIM), control in the opposite direction is also possible, i.e. a bidirectional communication between the tractor and the implements occurs.

In particular, according to the TIM system, the tractor is a "server" and each implement is a "client" communicatively coupled to the server. Therefore, as the respective names suggest, each client can control the tractor, in addition to be controlled by the tractor.

When a tractor user wishes to use an implement, the user has to select such implement, e.g. on a user interface associated with such implement. The implement, acting as client, requires some predetermined operational conditions of the tractor, acting as server. Therefore, the TIM system verifies such conditions. If they are satisfied, the implement becomes engageable and the user has to confirm enablement thereof, e.g. by pressing a button inside the tractor cab dedicated to implement enabling, before being actually able to use the implement.

Multiple implements may be enabled at the same time. To do so, the steps described above must be performed for each implement that the user wishes to use.

In several operations, e.g. when the tractor is moving from a field to another or is performing particular manoeuvres, all enabled implements have to be temporarily disabled so as to allow the execution of the aforementioned operations..

In these situations, the user has to manually disable all enabled implements, one at a time, and then re-enable them one at a time by performing, for each of them, all the steps described above.

Clearly, this causes discomfort to the user, is time-consuming and error-prone. Indeed, the user has to perform many actions manually, thus wasting time and potentially making mistakes.

Therefore, the need is felt to improve known work vehicles and control methods thereof.

An aim of the present invention is to satisfy the above-mentioned needs in a cost-effective and optimised manner.

### SUMMARY OF THE INVENTION

The aforementioned aim is reached by a work vehicle and a related control method as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 is a perspective view of an interior of a work vehicle according to the invention; and
- Figures 2 is a flowchart of a method according to the invention.

### DETAILED DESCRIPTION OF THE INVENTION

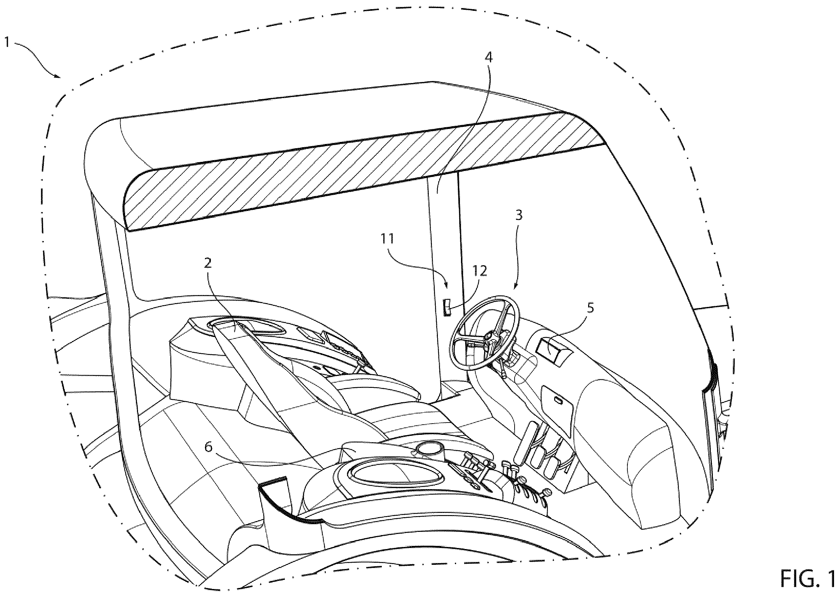

Figure 1 shows an exemplarily interior space of a cab of a work vehicle 1, shown only partially for the sake of clarity.

The work vehicle 1, such as an agricultural vehicle, is of known type and comprises a seat 2 for a vehicle user, command means 3, e.g. a steering system and brake pedals, and an electronic control unit (not shown) comprising processing means.

Conveniently, the work vehicle 1 comprises A-pillars 4, i.e. the frontmost vertical or nearly vertical supports of e.g. its front windscreen, a dashboard 5 which is preferably arranged near the command means 3, and an armrest 6 carried by the seat 2.

The work vehicle 1 is configured to be connected to at least one implement (not shown), such as a plough, a cultivator, a mulcher, a disk harrow or a power harrow.

Preferably, the work vehicle 1 comprises input means 11 for providing a pause command and a resume command, as described in detail hereinafter.

In particular, the input means 11 comprise a switch 12 configured to assume a first state and a second state, wherein the first state corresponds to the pause command and the second state corresponds to the resume command.

According to the exemplarily shown embodiment (figure 1), the switch 12 is a balanced rocker switch. Therefore, the first state and the second state correspond to two operational positions that the balanced rocker switch 12 can assume.

According to other embodiments (not shown), the switch 12 may be a push button, i.e. a concrete button which can be pressed by the vehicle user, or a graphical control element, e.g. an icon of a touchscreen.

Conveniently, the input means 11 are within reach of the vehicle user.

In particular, according to the exemplarily shown embodiment (figure 1), the input means 11 are carried by the A-pillar 4.

According to other embodiments (not shown), the input means 11 may be carried by the armrest 6 or by the dashboard 5.

In the following, without loss of generality, the work vehicle 1 is assumed to be connected to a plurality of implements, which can be of any type. A generic implement of the plurality of implement is denoted with *i*.

The electronic control unit is configured to be communicatively coupled to each implement *i* connected to the work vehicle 1, and to execute a method for controlling the work vehicle 1, as described in detail hereinafter.

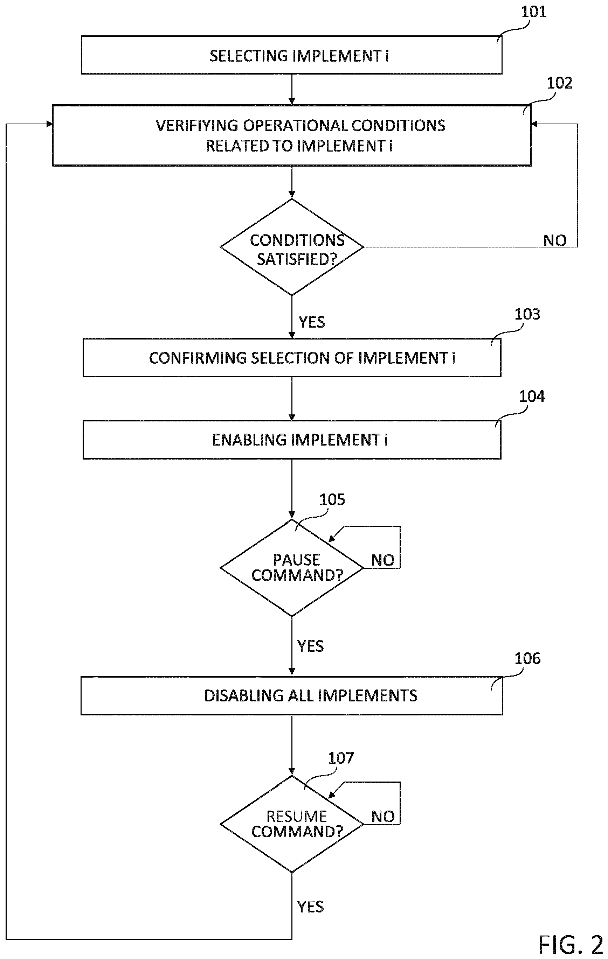

The method for controlling the work vehicle 1 (figure 2) comprises a plurality of steps.

Initially, in a step 101, an implement *i* is selected.

Conveniently, such implement is selected by the vehicle user, e.g. by pressing a button on the dashboard 5.

Therefore, the electronic control unit is configured to receive signals indicative of the selection of the implement *i*.

In a step 102, which follows step 101, operational conditions related to implement *i* are verified.

In particular, assuming a bidirectional communication between the work vehicle 1 and each implement *i*, wherein the work vehicle 1 is a "server" and each implement *i* is a "client" communicatively coupled to the server, the implement *i* requires some predetermined operational conditions of the work vehicle 1. Such operational conditions may be suitably defined so as to guarantee satisfactory operation of the implement *i* when enabled. Therefore, such operational conditions depend on the specific implement *i* and may thus be different for each implement *i* connected to the work vehicle 1.

Conveniently, the implement *i* is engageable only if the operational conditions related thereto are satisfied.

If the operational conditions related to implement *i* are satisfied, a step 103 is executed. Otherwise, step 102 is executed again. In other words, step 103 is executed if and only if the conditions are satisfied.

In step 103, the selection of the implement *i* is confirmed.

For safety reasons, such confirmation is performed by the vehicle user, e.g. by pressing a button on the dashboard 5 which may be the same button previously pressed for the selection of the implement *i*.

Therefore, the electronic control unit is configured to receive signals indicative of the confirmation of the selection of the implement *i*.

Conveniently, the vehicle user is notified of the fact that the implement *i* is engageable, and thus of the possibility to confirm the selection thereof, by a visual indicator, e.g. a LED which is associated to the implement *i* and switches on or changes colour when the implement *i* is engageable.

In a step 104, which follows step 103, the implement *i* is enabled.

In particular, the electronic control unit is configured to enable the implement *i*, which is engageable and whose selection has just been confirmed in step 103.

As soon as the implement *i* is enabled, the vehicle user can use it and perform any desired operation therewith.

Conveniently, the steps 101 to 104 can be executed for each implement *i* connected to the work vehicle 1.

Therefore, multiple implements may be enabled, i.e. be at step 104, at the same time.

In a step 105, which follows step 104, the aforementioned pause command may be provided.

In particular, if the vehicle user wishes to temporarily disable all enabled implements, e.g. because the work vehicle 1 is moving from a field to another or is performing particular manoeuvres, the pause command can be issued by the vehicle user via the input means 11.

Conveniently, the vehicle user can act on the switch 12 of the input means 11 so as to put it in the first state, corresponding to the pause command.

Therefore, the electronic control unit is configured to receive signals indicative of the pause command.

If the pause command is issued, a step 106 is executed. Otherwise, no change occurs, i.e. the vehicle user can continue to use all the enabled implements and perform any desired operation therewith. In other words, step 106 is executed if and only if the pause command is issued.

In step 106, all implements are disabled.

Clearly, disabling all implements is equivalent to disabling all enabled implements.

In particular, the electronic control unit disables each implement *i* which was enabled when (i.e. just before) the pause command was issued. Preferably, all such implements are disabled simultaneously.

In a step 107, which follows step 106, the aforementioned resume command may be provided.

In particular, if the vehicle user wishes to re-enable all implements which were enabled at step 104, i.e. just before the pause command was issued, the resume command can be issued by the vehicle user via the input means 11.

Conveniently, the vehicle user can act on the switch 12 of the input means 11 so as to put it in the second state, corresponding to the resume command.

Therefore, the electronic control unit is configured to receive signals indicative of the resume command.

If the resume command is issued, the method returns to step 102 for each implement *i* which was enabled at step 104, i.e. just before the pause command was issued. Otherwise, no change occurs, i.e. all implements continue to be disabled.

In other words, if the resume command is issued, the operational conditions related to implement *i* are verified again for each implement *i* which was enabled at step 104. The following steps are the same as those described above.

In general, if *I* denotes the set of all implements *i* connected to the work vehicle 1 and *E* denotes the set of all enabled implements *i* connected to the work vehicle 1, then *E* is a subset of *I* (i.e. *E*⊆*I*) and the elements of the set *E* are all and only the implements *i* which are enabled at step 104. If the resume command is issued at step 107, the operational conditions which are verified in the following step 102 are those of all and only the implements belonging to the set *E.*

Conveniently, any implement *i* which is enabled at step 104, and thus belongs to the set *E,* may be individually disabled before step 105, i.e. without exploiting the pause command, e.g. because the vehicle user has finished performing any desired operation therewith. Conveniently, such implement *i* can be individually disabled by the vehicle user, e.g. by pressing a button associated to such implement *i* on the dashboard 5. In this case, such implement *i* is removed from, i.e. does not belong anymore to, the set *E* as soon as it is individually disabled, and has to be selected again in step 101 for any subsequent use thereof.

In view of the above, the invention also relates to a method for controlling the work vehicle 1, comprising the steps of:
a) selecting an implement *i* connected to the work vehicle 1;
b) verifying, by the electronic control unit, that operational conditions of the work vehicle 1 are satisfied, the implement *i* being engageable only if said operational conditions are satisfied;
c) if the implement *i* is engageable, enabling, by the electronic control unit, the implement *i* upon confirmation of the selection of said implement;
d) disabling, by the electronic control unit, all implements upon a pause command; and
e) returning to step b) for each implement *i* enabled at step c), upon a resume command.

Conveniently, the step c) comprises the step of storing each enabled implement *i*.

In particular, each implement *i* is added to the set *E* as soon as it is enabled.

Conveniently, the step e) comprises the step of retrieving each enabled implement *i* stored at step c).

In particular, the implements *i* retrieved at step e) are those belonging to the set *E* when the pause command was issued, i.e. all and only the implements *i* which have been enabled at step c) and which have not subsequently been individually disabled.

In view of the foregoing, the advantages of the work vehicle and related control method according to the invention are apparent.

When the vehicle user wishes to temporarily disable all enabled implements, it is sufficient to issue the pause command and, subsequently, the resume command.

This can be done easily via the input means 11, which may be carried by the A-pillar 4 or by the armrest 6 or by the dashboard 5, in each case being within easy reach of the vehicle user.

Therefore, there is no need to manually disable all enabled implements, one at a time, and then re-enable them one at a time by selecting each one again.

Consequently, the vehicle user is prevented from discomfort, saves time and avoids mistakes.

It is clear that modifications can be made to the described work vehicle and related control method which do not extend beyond the scope of protection defined by the claims.

For example, in step 101, the selection of an implement *i* may be automatically performed, e.g. by the electronic control unit in any suitable way.

## Claims

1. Method for controlling a work vehicle (1), the work vehicle (1) comprising an electronic control unit and being configured to be connected to at least one implement, the method comprising the steps of:
a) selecting an implement connected to the work vehicle (1) ;
b) verifying, by the electronic control unit, that operational conditions of the work vehicle (1) are satisfied, said implement being engageable only if said operational conditions are satisfied;
c) if said implement is engageable, enabling, by the electronic control unit, said implement upon confirmation of the selection of said implement;
d) disabling, by the electronic control unit, all implements upon a pause command; and
e) returning to step b) for each implement enabled at step c), upon a resume command.

2. Method as claimed in claim 1, wherein the electronic control unit is configured to receive signals indicative of the selection of an implement connected to the work vehicle (1), the confirmation of the selection of said implement, the pause command and the resume command.

3. Method as claimed in claim 1 or 2, wherein the step c) comprises the step of storing each enabled implement.

4. Method as claimed in claim 3, wherein the step e) comprises the step of retrieving each enabled implement stored at step c) .

5. Method as claimed in any of the preceding claims, wherein each enabled implement can be individually disabled.

6. Method as claimed in claims 4 and 5, wherein the step of retrieving each enabled implement comprises the step of retrieving each enabled implement not subsequently individually disabled.

7. Method as claimed in any of the preceding claims, comprising a bidirectional communication between the work vehicle (1) and each implement connected to the work vehicle (1) .

8. Electronic control unit comprising processing means configured to execute the method according to any of the preceding claims.

9. Work vehicle comprising an electronic control unit, the work vehicle (1) being configured to be connected to at least one implement, the control unit comprising processing means configured to execute the method according any of claims 1 to 7.

10. Work vehicle as claimed in claim 9, comprising input means (11) for providing the pause command and the resume command.

11. Work vehicle as claimed in claim 10, wherein the input means (11) comprise a switch (12), the switch (12) being configured to assume a first state and a second state, the first state corresponding to the pause command, the second state corresponding to the resume command.

12. Work vehicle as claimed in claim 11, wherein the switch (12) is a balanced rocker switch or a push button or a graphical control element.

13. Work vehicle as claimed in any of claims 10 to 12, comprising an A-pillar (4), the input means (11) being carried by the A-pillar (4).

14. Work vehicle as claimed in any of claims 10 to 12, comprising a seat (2) for a user of the work vehicle (1) and an armrest (6) carried by the seat (2), the input means (11) being carried by the armrest (6).

15. Work vehicle as claimed in any of claims 10 to 12, comprising a dashboard (5), the input means (11) being carried by the dashboard (5).
